# FASCICULE DE BREVET EUROPEEN

(11) **EP 1 426 901 B1**
(45) Date de publication et mention de la délivrance du brevet: **22.02.2006**
(21) Numéro de dépôt: 03292828.5
(22) Date de dépôt: 14.11.2003
(51) Int. Cl.: G06T 7/20

(54) **Procédé pour détecter des cibles ponctuelles et système de veille mettant en oeuvre ce procédé de détection de cibles**
Zielerfassungverfahren für punktförmige Ziele und das Verfahren umsetzendes Überwachungssystem
Method of detecting point targets and surveillance system applying the method

(30) Priorité: 04.12.2002 FR 0215277
(43) Date de publication de la demande: 09.06.2004
(73) Titulaire: EADS Systems & Defence Electronics, 78140 Vélizy Villacoublay (FR)
(72) Inventeur: Prang, Eric, 78720 Senlisse (FR)
(74) Mandataire: Chameroy, Claude

(56) Documents cités:
- EP-A- 0 488 458
- WO-A-00/79800

## Description

La présente invention a pour objet un procédé pour détecter des cibles ponctuelles dans des images successives fournies par au moins un capteur matriciel. Elle a trait également à un système de veille mettant en oeuvre ce procédé.

Les systèmes de veille connus à l'heure actuelle sont généralement basés sur le principe du balayage. Autrement dit, une ou plusieurs barrettes de détection sont mises en rotation de manière à couvrir un champ panoramique. Cependant, de tels systèmes présentent des problèmes de détection et de fausses alarmes dus essentiellement à la faible fréquence des mesures dans une direction précise, les barrettes de détection ne pouvant guère effectuer plus de deux tours par seconde, ainsi qu'à la non reproductibilité d'une mesure d'un tour sur l'autre.

Le document EP-A-0 488 458 décrit une solution au problème de la détection de cibles ponctuelles qui comprend une étape de détection des vraies cibles à partir de l'observation des coordonnées de têtes de trajectoires et des coordonnées de nouvelles alarmes ponctuelles.

La présente invention, définie dans les revendications, a pour but principal de remédier aux inconvénients de l'art antérieur et, pour ce faire, elle a pour objet un procédé de détection du type susmentionné qui se caractérise essentiellement en ce qu'il comprend les étapes consistant à :
- sélectionner tous les pixels de la matrice présentant un extremum local, c'est-à-dire dont la valeur est supérieure à celle de tous ses voisins immédiats ; et
- réaliser un filtrage spatio-temporel sur les images successives de façon à associer les pixels sélectionnés d'une image sur l'autre, mais seulement si ceux-ci sont immédiatement voisins, réalisant ainsi une piste.

De préférence, le procédé de l'invention comprend également les étapes consistant à :
- calculer la densité locale des pixels sélectionnés et cumuler ces densités dans un registre en l'absence d'association de pixels voisins ; et
- abandonner la piste en cas de dépassement du registre, au-delà d'un seuil fixé.

Un système de veille mettant en oeuvre le procédé de détection conforme à l'invention et comprenant au moins un capteur matriciel et des moyens de filtrage spatio-temporel pour filtrer les images fournies par le capteur afin d'éliminer les bruits pour ne conserver que les cibles réelles, est essentiellement caractérisé en ce que :
- le capteur matriciel est fixe et fournit des images successives de la zone à surveiller avec une fréquence supérieure à 10 Hz ; et
- les moyens de filtrage spatio-temporel sont réalisés en logique câblée.

Le capteur fixe permet évidemment, par rapport à un capteur rotatif, de fournir un nombre élevé d'images pouvant aller jusqu'à 50 images par seconde. La fréquence des mesures et leur corrélation dans un temps bref conduit à un bien meilleur filtrage de l'ensemble des bruits de mesure, mais la difficulté réside alors dans le volume des données à traiter.

Le procédé de l'invention permet précisément de traiter rapidement toutes ces données, grâce à des moyens de filtrage spatio-temporels efficaces et surtout implantables dans une électronique câblée, du fait que les différentes opérations à effectuer restent relativement simples et ne nécessitent pas de seuil. On notera en effet que dans une solution plus classique, le volume des données à traiter imposerait des calculateurs d'une puissance phénoménale, impossibles à réaliser actuellement dans un volume compatible avec les applications envisagées.

Dans une forme de réalisation particulière de l'invention, le capteur matriciel est constitué par un dispositif optique associé à une matrice photosensible fonctionnant dans le spectre des cibles à détecter.

De préférence, la matrice est sensible à l'infrarouge.

De préférence également, le capteur matriciel comporte deux matrices photosensibles fonctionnant dans deux bandes différentes du spectre, ce qui permet d'écarter de fausses cibles du type "reflet solaire". Dans ce cas naturellement, l'invention est appliquée aux deux types de détection et les informations correspondantes sont ensuite fusionnées.

Dans une application particulière du système de veille selon l'invention à l'équipement d'un navire de surface, il est prévu quatre capteurs matriciels disposés à 90° les uns des autres dans un plan horizontal, ainsi qu'un cinquième capteur disposé verticalement et orienté vers le haut, l'ensemble étant monté sur une plate-forme stabilisée dans toutes les directions.

Une forme d'exécution de l'invention est décrite ci-après à titre d'exemple, en référence aux dessins annexés dans lesquels :
- la figure 1 est une vue en perspective schématique d'un dispositif de détection conforme à l'invention ;
- la figure 2 est un schéma synoptique du système de veille complet ;
- la figure 3 est un schéma illustrant le calcul de la densité de détection dans la mise en oeuvre du procédé conforme à l'invention ;
- la figure 4 est un graphique montrant la courbe de probabilité de détection de deux pixels voisins dans deux trames successives, en fonction du taux de détection local ; et
- la figure 5 est un graphique illustrant le principe du maintien ou de l'abandon des pistes dans le procédé selon l'invention.

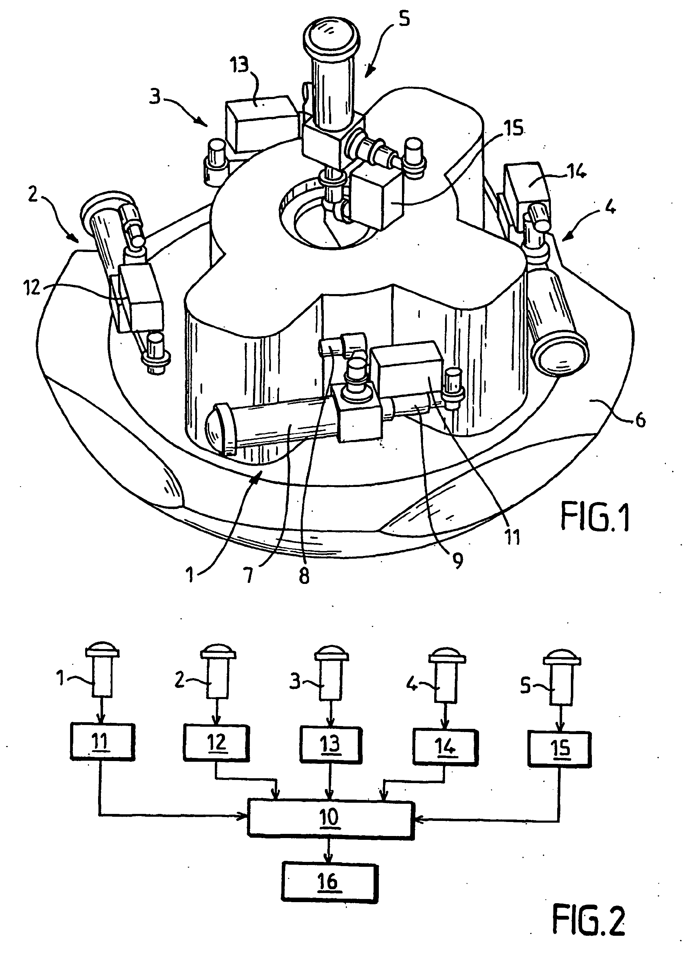

Le dispositif de détection représenté sur la figure 1 est plus spécialement destiné à équiper un navire de surface. Il se compose essentiellement de quatre capteurs matriciels 1, 2, 3 et 4, disposés à 90° les uns des autres dans un plan horizontal, et d'un cinquième capteur matriciel 5, disposé verticalement et orienté vers le haut, l'ensemble étant monté sur une plate-forme 6. Conformément à l'invention, tous ces capteurs doivent être fixes et les mouvements du navire sont donc compensés par des moyens de stabilisation appropriés de type connu agissant sur la plate-forme 6.

Chaque capteur matriciel comporte une partie optique 7 formant objectif et une partie matrice de détection fonctionnant dans le spectre des cibles à détecter. De tels capteurs existent sur le marché et ne seront donc pas décrits plus en détail. On notera simplement que dans le cas présent, les capteurs matriciels sont conçus pour fonctionner dans le domaine de l'infrarouge. De plus, chaque capteur comporte en fait deux matrices de détection, respectivement 8 et 9, fonctionnant dans deux bandes différentes du spectre infrarouge, par exemple dans la bande 2 et dans la bande 3.

Il est en effet avantageux, pour le principe même de la détection de cibles et pour la suppression de cibles du type "reflet solaire", de bénéficier d'une double détection dans deux bandes spectrales différentes. Dans ce cas, l'invention est bien entendu appliquée aux deux types de détection et le pistage final, de type conventionnel, réalise la fusion des informations, ce qui permet de rejeter des cibles inutilisables opérationnellement.

Comme illustré sur la figure 2, qui représente un système de veille complet, les informations fournies par les différents capteurs 1 à 5, ou plus précisément par les matrices de détection 8 et 9, sont d'abord traitées dans une électronique de traitement, respectivement 11 à 15. Conformément à l'invention et comme représenté sur la figure 1, ces électroniques de traitement sont implantées sur la plate-forme 6, à proximité de chacun des capteurs, car les débits sont importants. Les capteurs fixes permettent en effet de fournir des images à fréquence élevée, par exemple 50 images par seconde, mais le volume des données à traiter est alors très important.

Le procédé de détection selon l'invention, qui sera décrit plus en détail par la suite, permet précisément de réaliser le filtrage spatio-temporel des différentes images fournies par les capteurs, en temps réel et sous forme de logique câblée, directement dans les électroniques de traitement 11 à 15 qui sont implantées sur la plate-forme 6.

Les informations issues des différentes électroniques de traitement 11 à 15 sont ensuite traitées de manière plus classique dans un calculateur central 10 qui réalise le pistage proprement dit et commande un dispositif d'alerte et de localisation des cibles 16, de type connu.

Le procédé de l'invention consiste à détecter des cibles de très petites dimensions ou cibles ponctuelles (sub-pixel) dans les images successives fournies par les capteurs matriciels 1 à 5. On filtre ensuite dans le temps les détections d'une image sur l'autre, réalisant ainsi un pistage. Afin d'avoir une sensibilité importante, on accepte de ne pas avoir de détection à chaque image. Toutefois, ces "trous" de détection doivent être contrôlés afin de limiter le niveau des fausses alarmes.

Le procédé repose sur les quatre principes suivants :
1 - La détection proprement dite qui ne comporte pas de seuil, mais une sélection des points par extremum local. Autrement dit, un point est décrété détecté si sa valeur est strictement supérieure à celle de tous ses voisins immédiats.
2 - Le calcul d'une densité de détection locale. On notera que le fait de ne détecter que des extremums locaux limite le taux de détection à 25 %.
3 - Le filtrage temporel des points détectés d'une image sur l'autre afin de réaliser un pistage. Conformément à l'invention, deux points ne sont associés pour former une piste que s'ils sont immédiatement voisins. En cas de non association, c'est-à-dire de trou de détection, on cummule dans un registre la densité de détection locale.
4 - L'abandon de la piste en cas de dépassement du registre de cumul de la densité de détection. De cette façon, un bruit aléatoire dans l'image n'est pas entretenu par le pistage.

On va maintenant décrire un peu plus en détail les quatre points ci-dessus.

Pour la détection proprement dite, ou filtrage spatial, on réalise un balayage de l'image et pour tous les points de cette image, on détermine une fenêtre de voisinage de 3 x 3. On compare alors le niveau de gris du pixel central par rapport à l'ensemble des 9 pixels de la fenêtre. A cet effet, on pourra par exemple trier les pixels en ordre croissant. On notera que selon ce procédé, deux pixels voisins ne peuvent pas être détectés simultanément.

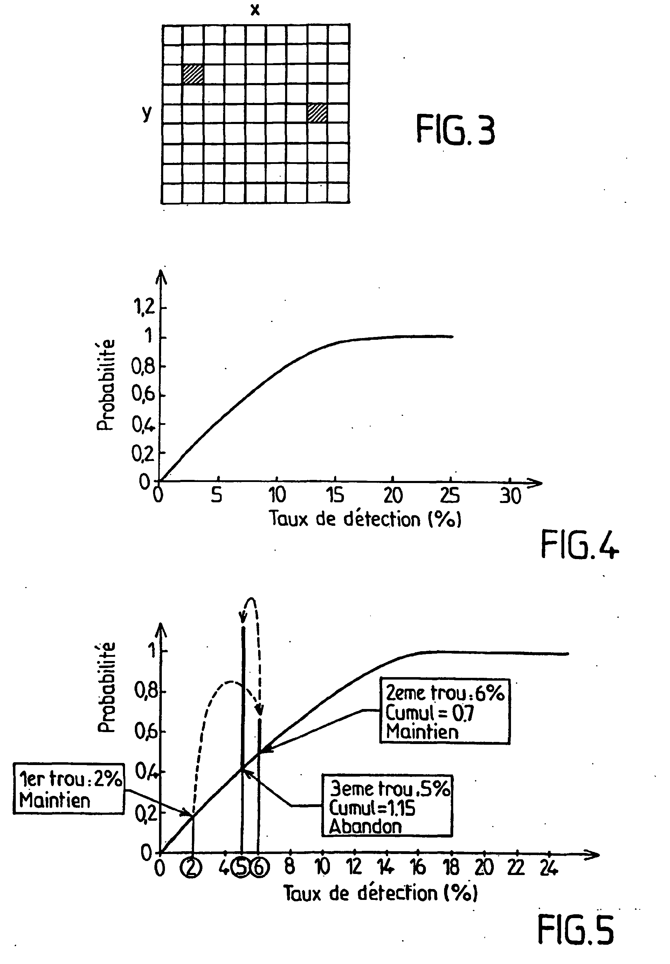

Pour le calcul de la densité de détection, on réalise un balayage de l'image et pour tous les points de cette image, on détermine une fenêtre de voisinage, par exemple de 9 x 9, comme illustré sur la figure 3. On fait alors la somme des points de détection dans cette fenêtre, que l'on rapporte aux dimensions de la fenêtre. Ainsi par exemple, dans le cas de la figure 3, il y a deux points de détection, donc un taux de détection τ (x, y) de 2/81, soit 2,47 %. S'il n'y a pas de point de détection dans la fenêtre choisie, on pourra l'agrandir afin d'avoir plus de précision.

Pour le pistage ou filtrage temporel des points détectés, on réalise un balayage de l'ensemble des points détectés dans l'image à une trame donnée. S'il existe une piste dans une fenêtre de voisinage 3 x 3, alors on entretient la piste et s'il existe une détection à la trame précédente dans une fenêtre de voisinage de 3 x 3, alors on crée une piste. On notera que les pistes ne se déplacent que d'un pixel maximum par image et que le fait de ne pas avoir de détection sur deux pixels voisins facilite beaucoup le processus de pistage.

Par ailleurs, on observe les pistes qui n'ont pas été entretenues parce qu'elles présentent des "trous" de détection. On additionne le taux de détection correspondant dans un registre de détection associé à la piste considérée et lorsque le registre est saturé, la piste est abandonnée, c'est-à-dire supprimée. Bien entendu, lors de l'entretien d'une piste, son registre de détection est ramené à zéro.

On va maintenant expliciter un peu mieux le processus de maintien ou d'abandon des pistes, en se référant aux figures 4 et 5.

Si l'on fait l'hypothèse que les pixels constituant des extremums locaux sont un bruit blanc gaussien bidimensionnel, la probabilité d'avoir deux pixels voisins d'une trame sur l'autre est donnée par la courbe représentée sur la figure 4, en fonction du taux de détection local.

Si l'on suppose maintenant, comme illustré sur la figure 5, un premier trou avec un taux de détection local de 2 %, on maintient la piste. Si à la trame suivante, un second trou apparaît avec un taux de détection de 6 %, le cumul de probabilité est de 0,7 et on maintient encore la piste. En revanche, si à la trame suivante un troisième trou apparaît avec un taux de détection de 5 %, alors le cumul de probabilité est de 1,15, donc supérieur à 1, et on abandonne par conséquent la piste.

Une piste qui est maintenue un certain nombre de trames est donc une piste qui a toutes les chances d'être une vraie cible, en fonction de l'âge de la piste et du taux de détection local. En pratique, on estime que les fausses pistes dues aux bruits électroniques ou aux bruits inhérents aux matrices de détection seront éliminées au bout de 16 trames maximum.

Le procédé de détection conforme à l'invention présente donc en définitive un certain nombre d'avantages. Il permet en particulier de conserver longtemps des pistes dans des régions où il n'y a que peu de pixels candidats, réalisant ainsi une sorte d'auto-adaptation locale. La détection est alors optimale sur les cibles de petite taille (sub-pixel) qui peuvent présenter un effet de scintillement.

Le procédé de l'invention permet également de s'adapter automatiquement au problème de la détection sur une zone uniforme de l'image. En effet, le bruit est alors le seul élément susceptible de créer des extremums locaux et comme le maintien des pistes est inversement proportionnel au nombre de points détectés, celles-ci sont naturellement éliminées.

Enfin et surtout, ce procédé ne nécessite que très peu de calcul et peut donc être implémenté très facilement sous forme de logique câblée dans des circuits électroniques peu volumineux, comme illustré en 11, 12, 13, 14 et 15 sur la figure 1. De plus, il permet de traiter un très grand nombre de points sans saturation, garantissant ainsi une grande sensibilité, même sur des images de taille et de résolution élevées.

On notera en outre que comme les capteurs sont fixes et que la fréquence des mesures est élevée, il est possible d'extraire facilement une information de mouvement apparent des cibles détectées, donc de vitesse. Cette mesure de vitesse sera avantageusement réalisée dans les circuits électroniques câblés 11 à 15, en amont d'un pistage de cible plus conventionnel réalisé par le calculateur 10.

Le système de veille conforme à l'invention mettant en oeuvre un tel procédé de détection permet ainsi de localiser les cibles (en site et gisement) en un temps très court qui permet de mettre en oeuvre des actions de protection efficaces.

## Revendications

1. Procédé pour détecter des cibles ponctuelles dans des images successives fournies par au moins un capteur matriciel, **caractérisé en ce qu'**il comprend les étapes consistant à :
- sélectionner tous les pixels de la matrice présentant un extremum local, c'est-à-dire dont la valeur est supérieure à celle de tous ses voisins immédiats ; et
- réaliser un filtrage spatio-temporel sur les images successives de façon à associer les pixels sélectionnés d'une image sur l'autre, mais seulement si ceux-ci sont immédiatement voisins, réalisant ainsi une piste.

2. Procédé selon la revendication 1, **caractérisé en ce qu'**il comprend également les étapes consistant à :
- calculer la densité locale des pixels sélectionnés et cumuler ces densités dans un registre en l'absence d'association de pixels voisins ; et
- abandonner la piste en cas de dépassement du registre, au-delà d'un seuil fixé.

3. Système de veille mettant en oeuvre le procédé de détection selon la revendication 1 ou 2, du type comprenant au moins un capteur matriciel (1, 2, 3, 4, 5) et des moyens de filtrage spatio-temporel (11, 12, 13, 14, 15) pour filtrer les images fournies par le capteur afin d'éliminer les bruits pour ne conserver que les cibles réelles, **caractérisé en ce que** :
- le capteur matriciel (1, 2, 3, 4, 5) est fixe et fournit des images successives de la zone à surveiller avec une fréquence supérieure à 10 Hz ; et
- les moyens de filtrage spatio-temporels (11, 12, 13, 14, 15) sont réalisés en logique câblée.

4. Système de veille selon la revendication 3, **caractérisé en ce que** le capteur matriciel (1, 2, 3, 4, 5) est constitué par un dispositif optique (7) associé à une matrice photosensible (8, 9) fonctionnant dans le spectre des cibles à détecter.

5. Système de veille selon la revendication 4, **caractérisé en ce que** la matrice (8, 9) est sensible à l'infrarouge.

6. Système de veille selon la revendication 4 ou 5, **caractérisé en ce que** le capteur matriciel (1, 2, 3, 4, 5) comporte deux matrices photosensibles (8, 9) fonctionnant dans deux bandes différentes du spectre.

7. Système de veille selon l'une quelconque des revendications 3 à 6, appliqué au cas particulier de l'équipement d'un navire de surface, **caractérisé en ce qu'**il comprend quatre capteurs matriciels (1, 2, 3, 4, 5) disposés à 90° les uns des autres dans un plan horizontal, ainsi qu'un cinquième capteur (5) disposé verticalement et orienté vers le haut, l'ensemble étant monté sur une plate-forme (6) stabilisée dans toutes les directions.

## Patentansprüche

1. Zielerfassungsverfahren für punktförmige Ziele in aufeinander folgenden, von mindestens einem Matrixsensor gelieferten Bildern, **dadurch gekennzeichnet, dass** es die folgenden Schritte umfasst:
- Auswahl aller Pixel der Matrix, die ein lokales Extremum aufweisen, d.h. deren Wert größer ist als derjenige aller seiner unmittelbaren Nachbarn; und
- Durchführung einer Raum-Zeit-Filterung bei den aufeinander folgenden Bildern zur Verbindung der ausgewählten Pixel von einem zum anderen Bild, jedoch nur wenn diese unmittelbar benachbart sind und somit eine Spur bilden.

2. Verfahren nach Anspruch 1, **dadurch gekennzeichnet, dass** es weiterhin die folgenden Schritte umfasst:
- Berechnung der lokalen Dichte der ausgewählten Pixel und Kumulierung dieser Dichten in einem Register bei nicht vorhandener Verbindung von benachbarten Pixeln; und
- Aufgabe der Spur bei Überschreiten des Registers über einen festgelegten Schwellwert hinaus.

3. Überwachungssystem zur Umsetzung des Erfassungsverfahrens nach Anspruch 1 oder 2 mit mindestens einem Matrixsensor (1, 2, 3, 4, 5) und Raum-Zeit-Filtermitteln (11, 12, 13, 14, 15) zum Filtern der vom Sensor gelieferten Bilder zur Unterdrückung des Rauschens und Beibehaltung nur der wirklich vorhandenen Ziele, **dadurch gekennzeichnet, dass**:
- der Matrixsensor (1, 2, 3, 4, 5) feststehend ist und aufeinander folgende Bilder des zu überwachenden Bereichs mit einer Frequenz von mehr als 10 Hz liefert; und
- die Raum-Zeit-Filtermittel (11, 12, 13, 14, 15) als fest verdrahtete Logik realisiert sind.

4. Überwachungssystem nach Anspruch 3, **dadurch gekennzeichnet, dass** der Matrixsensor (1, 2, 3, 4, 5) aus einer im Spektrum der zu erfassenden Ziele funktionierenden optischen Vorrichtung (7) in Verbindung mit einer fotoempfindlichen Matrix (8, 9) besteht.

5. Überwachungssystem nach Anspruch 4, **dadurch gekennzeichnet, dass** die Matrix (8, 9) infrarotempfindlich ist.

6. Überwachungssystem nach Anspruch 4 oder 5, **dadurch gekennzeichnet, dass** der Matrixsensor (1, 2, 3, 4, 5) zwei fotoempfindliche Matrizen (8, 9) aufweist, die in zwei verschiedenen Bändern des Spektrums funktionieren.

7. Überwachungssystem nach einem der vorhergehenden Ansprüche 3 bis 6, angewendet auf den Sonderfall der Ausrüstung eines Überwasserschiffes, **dadurch gekennzeichnet, dass** es vier 90° voneinander entfernte, in einer horizontalen Ebene angeordnete Matrixsensoren. (1, 2, 3, 4, 5) sowie einen fünften senkrecht angeordneten und nach oben gerichteten Sensor (5) aufweist, wobei das Ganze auf einer in alle Richtungen stabilisierten Plattform (6) montiert ist.

## Claims

1. Method for detecting isolated targets in successive images supplied by at least one matrix sensor, **characterized in that** it includes steps consisting in:
- selecting all the pixels of the matrix presenting a local extremum, that is, with a value greater than that of all its immediate neighbours; and
- performing a space -time filtering on the successive images so as to associate the pixels selected from one image to another, but only if the latter are immediately adjacent, so creating a track.

2. Method according to Claim 1, **characterized in that** it also includes steps consisting in:
- calculating the local density of the selected pixels and aggregating these densities in a register in the absence of adjacent pixel association; and
- discarding the track in the case of a register overrun, beyond a fixed threshold.

3. Observation system implementing the method of detecting according to Claim 1 or 2, of the type comprising at least one matrix sensor (1, 2, 3, 4, 5) and space-time filtering means (11, 12, 13, 14, 15) for filtering the images supplied by the sensor in order to eliminate the noises to retain only the real targets, **characterized in that**:
- the matrix sensor (1, 2, 3, 4, 5) is fixed and supplies successive images of the area to be monitored with a frequency greater than 10 Hz; and
- the space-time filtering means (11, 12, 13, 14, 15) are implemented as hardwired logic.

4. Observation system according to Claim 3, **characterized in that** the matrix sensor (1, 2, 3, 4, 5) comprises an optical device (7) associated with a photosensitive matrix (8, 9) operating in the spectrum of the targets to be detected.

5. Observation system according to Claim 4, **characterized in that** the matrix (8, 9) is sensitive to infrared.

6. Observation system accordi ng to Claim 4 or 5, **characterized in that** the matrix sensor (1, 2, 3, 4, 5) includes two photosensitive matrices (8, 9) operating in two different bands of the spectrum.

7. Observation system according to any one of Claims 3 to 6, applied in the particular case of the equipment of a surface vessel, **characterized in that** it includes four matrix sensors (1, 2, 3, 4, 5) disposed at 90° to each other in a horizontal plane, and a fifth sensor (5) disposed vertically and oriented upwards, the assembly being mounted on a platform (6) stabilized in all directions.
